(19) Europäisches Patentamt
European Patent Office
Office européen des brevets

(11) **EP 0 669 524 B1**

(12) **EUROPÄISCHE PATENTSCHRIFT**

| | |
|---|---|
| (45) Veröffentlichungstag und Bekanntmachung des Hinweises auf die Patenterteilung:<br>**30.06.1999  Patentblatt 1999/26** | (51) Int Cl.$^6$: **G01K 17/06** |

(21) Anmeldenummer: **94118465.7**

(22) Anmeldetag: **24.11.1994**

(54) **Vorrichtung zur Messung der von einem Heizkörper abgegebenen Wärmemenge**

Device for measuring the quantity of heat supplied by a heating body

Dispositif de mesure de la quantité de chaleur fournie par un corps de chauffage

(84) Benannte Vertragsstaaten:
**AT BE CH DE DK ES FR GB GR IE IT LI LU MC NL PT SE**

(30) Priorität: **30.12.1993  DE 4344981**

(43) Veröffentlichungstag der Anmeldung:
**30.08.1995  Patentblatt 1995/35**

(73) Patentinhaber: **Techem Akfiengesellschaft & Co.**
**60528 Frankfurt (DE)**

(72) Erfinder: **Klein, Joachim**
**D-64807 Dieburg (DE)**

(74) Vertreter: **Schubert, Siegmar, Dipl.-Ing. et al**
**Patentanwälte**
**Dr. Weinhold, Dannenberg,**
**Dr. Gudel, Schubert**
**Grosse Eschenheimer Strasse 39**
**60313 Frankfurt (DE)**

(56) Entgegenhaltungen:
**BE-A- 892 583          FR-A- 2 484 640**

- **ELEKTROTECHNIK UND MASCHINENBAU, Bd. 97,Nr. 3, März 1980 WIEN AT, Seiten 125-128, UDO SCHMITZ E.A. 'ELEKTRONISCHES MESSSYSTEM FUR DIE HEIZKOSTENVERTEILUNG'**
- **IKZ HAUSTECHNIK SANITAR, HEIZUNG KLIMA ELEKTRO, Bd. 13, 1985 ARNSBERG DE, Seiten 24-25, ANONYMOUS 'HEIZ- UND WARMWASSERKOSTENABRECHNUNG'**

**Beschreibung**

Die Erfindung betrifft eine Vorrichtung zur Messung der Wärmemenge, die von einem Heizkörper abgegeben wird, der über einen Vorlauf und einen Rücklauf von einem Heizmedium durchflossen ist, wobei wenigstens zwei in lotrechter Richtung voneinander beabstandete Temperaturfühler vorgesehen sind, die in wärmeleitender Verbindung mit dem Heizkörper stehen, und aus deren Meßwerten über eine Auswerteschaltung die von dem Heizkörper abgegebene Wärmemenge berechnet wird.

Bei den zu messenden Heizkörpern handelt es sich physikalisch um Flüssigkeits/Luft-Wärmetauscher, so daß grundsätzlich drei Wege zur Bestimmung der abgegebenen Wärmemenge bzw. der Heizkörperleistung möglich sind:

a) Heizmediumseitige Enthalpiebilanz

Eine Enthalpiebilanz am Heizmedium ergibt unter der gerechtfertigten Annahme einer mittleren Wärmekapazität $c_p$ bei konstantem Druck des Heizmediums die Bestimmungsgleichung.

$$\dot{Q} = c_p \times m \times (t_v - t_r)$$

Mittels der Messung von Heizmittelstrom m und Vorlauf- und Rücklauftemperatur $t_v$ bzw. $t_r$ läßt sich somit die Heizkörperwärmeleistung $\dot{Q}$ exakt bestimmen. Dieser Ansatz führt zu dem bekannten Verfahren der Wärmezähler.

b) Luftseitige Enthalpiebilanz

Der luftseitige Enthalpieansatz führt zu keinem praktisch verwertbaren Verfahren, da die Luft nicht leitungsgebunden ist und somit eine Definition oder Messung von Massenströmen und Drucken in der Regel nicht durchführbar ist.

c) Wärmetauschereigenschaften des Heizkörpers

Eine Bestimmung der Heizkörperleistung ohne direkte Bestimmung von Volumenströmen setzt die Ermittlung von oder Annahmen über die Wärmetauschereigenschaften des zu messenden Heizkörpers voraus.

Ein bekannter Ansatz ist die Errechnung der Heizkörperleistung aus der Normwärmeleistung mittels der Heizkörperkennlinie, nämlich des Potenzgesetzes:

$$\dot{Q} = \dot{Q}n \times \left(\frac{\Delta t}{\Delta tn}\right) M$$

wobei $\Delta t$ die Heizflächenübertemperatur ist:

$\Delta t = t_{heiz} - t_{luft}$

$\dot{Q}n$ = Normwärmeleistung, $\Delta tn$ = Norm-Übertemperatur

Die Heizkörperkennlinie beschreibt die Verhältnisse gut bei (gegenüber Normzustand) konstantem Massenstrom mit unterschiedlichen Vorlauftemperaturen, das heißt bei relativen Temperaturspreizungen, die nicht wesentlich vom Normzustand abweichen.

In diesem Bereich ist der Temperaturverlauf über der Heizkörperhöhe linear, so daß die wirksame Heizflächentemperatur dem arithmetischen Mittel aus Vorlauf und Rücklauftemperatur entspricht.

Bekannte elektronische Heizkostenverteiler (Einfühlergeräte) messen die Temperatur der Heizfläche mit einem Temperaturfühler und errechnen die Wärmeleistung unter Annahme einer Raumtemperatur von $t_1 = 20°C$.

Die sich bei abweichenden tatsächlichen Raumtemperaturen ergebende Meßabweichung wird von elektronischen Heizkostenverteilern mit einem zweiten Temperaturfühler zur Messung der Temperatur der Raumluft $t_1$ (Zweifühlergerät) vermieden.

Bei stärkerer Drosselung des Heizmittelstroms und sich damit ergebender größerer Temperaturspreizung weicht aber der Temperaturverlauf von einer linearen Verteilung ab. An die Stelle einer Heizkörperkennlinie tritt dann ein Kennlinienfeld mit dem Heizmitteldurchsatz als Parameter.

Bei den bekannten Heizkostenverteilern entsteht hier eine systematische Meßabweichung, da der Heizmitteldurchsatz bzw. der Verlauf der Temperaturverteilung nicht erfaßt werden kann.

Ein Beispiel für ein Zweifühlergerät zeigt die DE 31 23 336 A1 Die beiden Temperaturfühler sind dort am Heizkörper in der Höhe des Vorlaufs bzw. des Rücklaufs angebracht, und zwar offenbar ohne gesonderte Gehäuse. Wegen des großen Abstandes der beiden Fühler voneinander wäre es auch nicht praktikabel, die beiden Fühler in einem gemeinsamen Gehäuse unterzubringen, das sich dann ja über die gesamte Höhe des Heizkörpers erstrecken würde. Die Montage der Fühler ist aber umständlich, weil beide Fühler getrennt montiert werden müssen. Auch müssen sie über eigene Leitungen an die gemeinsame Auswerteeinheit angeschlossen werden, was aufwendig und ebenfalls umständlich ist. Hier ist auch zu beachten, daß in einem Haus in der Regel eine Vielzahl der Heizkörper entsprechend ausgerüstet werden muß, und zwar zu geringstmöglichen Kosten.

Der Zeitschrift "Elektronik und Maschinenbau, Jahrgang 97, Heft 3, 1980, Seiten 125 - 128, kann der Gedanke entnommen werden, die Heizkörpertemperatur als Funktion der Temperaturspreizung zwischen Vor- und Rücklauf zu beschreiben.

Das Kennlinienfeld der Temperaturverteilung kann bekanntermaßen dann auf eine Kennlinie zurückgeführt werden, wenn anstelle der arithmetischen die logarithmische Übertemperatur

$$\Delta t_{log} = \frac{tv - tr}{\ln \left( \frac{tv - tl}{tr - tl} \right)}$$

in das Potenzgesetz eingesetzt wird. Dies entspricht einer von Grashoff angegebenen Beziehung für den mittleren Temperaturunterschied bei Wärmetauschern, die auch für Heizkörper empirisch belegt ist. (Vgl. DIN/4703).

Diesen Ansatz benutzt das bekannte Dreifühlerverfahren. Mittels der Messung von Vorlauf-, Rücklauf- und Raumlufttemperatur wird die logarithmische Übertemperatur des Heizkörpers und daraus die abgegebene Wärmemenge bei allen Massenströmen und Temperaturspreizungen berechnet.

Nachteilig beim Dreifühlergerät ist der aufwendige Aufbau mit in großem Abstand voneinander zu plazierenden Temperaturfühlern und entsprechendem Verkabelungsaufwand. Die Temperaturmeßstellen des Heizmediums sind auf die vertikale Höhe von Vor- und Rücklaufanschluß festgelegt, so daß ein einheitlicher, kompakter Geräteaufbau für die verschiedenen Heizkörper nicht realisierbar ist. (Vgl. die vorstehend erwähnte DE 31 23 336 A1.) Ein weiterer Nachteil ist die starke Abhängigkeit der Meßqualität von der Genauigkeit der Raumluftmessung, die hieraus resultierenden Fehlerquellen und die Manipulationsgefahr.

Demgegenüber liegt der Erfindung somit die Aufgabe zugrunde, ein Verfahren vorzuschlagen, mit dem es bei geringem Montageaufwand mittels eines kompakt aufgebauten und für verschiedene Heizkörper einheitlichen Heizkostenverteilers möglich ist, die Heizkörperleistung bei allen Betriebszuständen des Heizkörpers mit hoher Genauigkeit und unempfindlich gegenüber äußeren Einflüssen zu erfassen.

Erfindungsgemäß wird die Aufgabe bei einer Vorrichtung mit den Merkmalen des Oberbegriffs von Patentanspruch 1 dadurch gelöst, daß der lotrechte Abstand der beiden in einem gemeinsamen Gehäuse untergebrachten Temperaturfühler fühlbar kleiner ist als der lotrechte Abstand zwischen dem Vorlauf und dem Rücklauf.

Erfindungsgemäß ist es somit möglich, aus den Meßwerten rechnerisch eine Kurve zu extrapolieren, die dem erwarteten Temperaturprofil des Heizkörpers entspricht und aus der die von dem Heizkörper abgegebene Wärmemenge berechnet wird, und zwar mit Hilfe von lediglich zwei in einem gemeinsamen Gehäuse untergebrachten Meßfühlern (Zweifühlergerät), wobei beide Meßfühler in direktem Kontakt mit der Oberfläche des betreffenden Heizkörpers stehen.

Anhand dieser Meßwerte kann dann auf den Gesamtverlauf der Heizflächentemperatur geschlossen werden, so daß alle vorkommenden Betriebszustände gleich genau erfaßt werden.

Das erfindungsgemäße Verfahren macht sich die Tatsache zunutze, daß der Betriebszustand eines Heizkörpers durch einen bestimmten Verlauf der Oberflächentemperatur exakt definiert ist. Wenn mit einem geeigneten Meßverfahren das Temperaturfeld auf der Oberfläche ermittelt bzw. berücksichtigt wird, so kann die Heizkörperleistung ohne direkte Rückschlüsse auf die Zustandswerte des Heizmediums exakt bestimmt werden.

Durch die erfindungsgemäßen Maßnahmen vermeidet man somit die arbeitsaufwendige Verdrahtung der drei Temperaturfühler bei dem eingangs geschilderten, bekannten Dreifühlergerät. Außerdem ist es nicht mehr notwendig, jeweils einen Temperaturfühler in den Vorlauf bzw. Rücklauf des Heizkörpers einzusetzen, was ebenfalls apparativ- und arbeitsaufwendig ist, wie dies beim Stand der Technik der Fall war. Stattdessen kann man die Temperaturfühler direkt auf die Oberfläche des Heizkörpers aufsetzen, und zwar an beliebiger Stelle, wobei auch ein viel kleinerer Abstand zwischen den Temperaturfühlern vorgesehen ist als dies dem Abstand des Vorlaufs und des Rücklaufs beim Stand der Technik entspricht. Auch bei entsprechend kleinerem Abstand kann man nämlich aus den Meßwerten die erwähnte Kurve mit ausreichender Genauigkeit extrapolieren. Aus diesem Grunde können alle in direktem Kontakt mit der Oberfläche des Heizkörpers stehenden Temperaturfühler in einem einzigen Gehäuse untergebracht sein.

Eine wichtige Ausgestaltung des erfindungsgemäßen Verfahrens ist dadurch gekennzeichnet, daß wenigstens drei der Temperaturfühler vorgesehen sind. Wenn man den dritten Temperaturfühler ebenfalls in direktem Kontakt mit der Oberfläche des betreffenden Heizkörpers anordnet, so wird dadurch die Extrapolation der betreffenden Kurve genauer und damit auch das Meßergebnis. Man kann den dritten Temperaturfühler aber auch als Luftfühler ausbilden und erhält dann eine Redundanz, die beispielsweise zur Kontrolle von Manipulationen ausgenutzt werden kann. So kann auch ein vierter Meßfühler vorgesehen sein, von denen drei Meßfühler am Heizkörper angebracht sind und der vierte als Temperaturfühler ausgebildet ist, der die Raumtemperatur mißt, usw.

Als dritter Parameter - bei zwei Temperaturfühlern am Heizkörper - kann auch die Höhe der beiden Fühler am Heizkörper dienen.

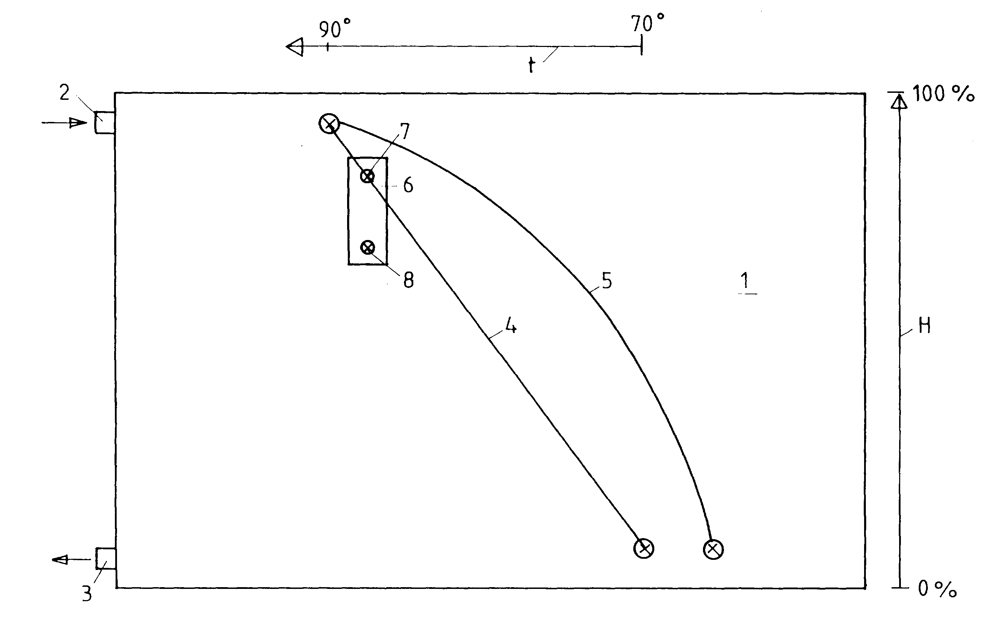

Die Erfindung wird im folgenden anhand eines Ausführungsbeispiels näher erläutert, aus dem sich weitere wichtige Merkmale ergeben. Die Figur zeigt schematisch eine Ansicht eines Heizkörpers mit Temperaturprofilen und mit der Anordnung eines erfindungsgemäßen Zweifühlergeräts.

Zunächst seien die für die vorliegende Erfindung wichtigen Überlegungen erläutert.

Betrachtet man die Temperaturverteilung auf dem Heizkörper, so ergeben sich die folgenden Zusammenhänge:

Die Temperatur ist stets streng monoton von Vorlauf zu Rücklauf fallend. Bei Normmassenstrom und Variation der Vorlauftemperatur ergeben sich lineare Verläufe mit geringer werdender Steigung bei geringer werdenden Vorlauftemperaturen.

Bei gleichbleibender Vorlauftemperatur und Variation des Massenstroms ergeben sich mit geringer werdendem Massenstrom zunächst Geraden mit größerer Steigung, mit immer weiterer Drosselung dann nichtlineare Verläufe, bei denen der Temperaturgradient zum Rücklauf hin geringer wird.

Jedem Betriebszustand des Heizkörpers entspricht somit genau ein definierter Verlauf der Heizkörperoberflächentemperatur. Ist dieser bekannt, so ist die Wärmeleistung gleichermaßen bestimmt.

Da der Betriebszustand des Heizkörpers mit einer bestimmten Temperaturverteilung einhergeht, ist im idealen Fall einer exakt bekannten Verteilung der Oberflächentemperatur die Raumtemperatur als Berechnungsgröße nicht notwendig, da die wirksame Übertemperatur durch den Verlauf repräsentiert wird. Diese Redundanz kann in verschiedener Weise ausgenutzt werden.

In der Figur ist schematisch eine Ansicht eines Heizkörpers 1 gezeigt. Dieser hat einen Vorlauf 2, durch den heißes Wasser von beispielsweise 90° C in Richtung des Pfeiles in den Heizkörper einströmt, sowie einen Rücklauf 3, über den das Wasser den Heizkörper in Richtung des Pfeiles verläßt, wobei es beispielsweise auf eine Temperatur von 70° C abgekühlt ist.

Über dem Heizkörper ist die Temperatur t aufgetragen, ausgedrückt in °C, und rechts neben dem Heizkörper dessen Höhe H, ausgedrückt in Prozent.

Es wurde schon erwähnt, daß bei ungedrosseltem Durchsatz des Heizmediums sich ein gerades Temperaturprofil ergibt, hier dargestellt durch die Kurve 4, die erläutert, daß die im oberen Bereich des Heizkörpers (nahe der Höhe 100 %) herrschende Temperatur von in diesem Beispiel 90° C linear abfällt auf eine Temperatur im unteren Bereich des Heizkörpers (Höhe H nahe 0 %) auf in diesem Beispiel 70° C.

Bei gedrosseltem Durchsatz des Heizmediums ergibt sich aber eine bauchige Kurve 5, die verdeutlicht, daß der Temperaturabfall nicht mehr linear ist, sondern es liegt im oberen Bereich ein stärkerer Temperaturabfall vor, der dann geringer wird.

Der Verlauf der betreffenden, bei den momentanen Betriebszuständen vorliegenden Kurve wird nun erfindungsgemäß mit Hilfe eines bei Pos. 6 angedeuteten Meßgeräts gemessen.

Dieses hat wenigstens zwei Temperaturfühler 7, 8, vorzugsweise drei Temperaturfühler.

Ein weiterer Temperaturfühler, das ist dann der dritte oder vierte Temperaturfühler, kann als Luft fühler vorgesehen sein (zeichnerisch nicht dargestellt).

Mit Hilfe der wenigstens zwei Temperaturfühler 7, 8 kann man die bei den betreffenden Betriebszuständen herrschende Temperaturverteilung, das heißt die Kurve 4 bzw. 5, berechnen und erhält dadurch die gesuchte, vom Heizkörper abgegebene Wärmemenge.

Eine vorteilhafte Ausbildung des Verfahrens besteht darin, daß die ermittelten Oberflächentemperaturen zur Extrapolation auf die Vor- und Rücklauftemperatur des Heizmediums herangezogen werden. Aus diesen wird dann zusammen mit der gemessenen Raumtemperatur die logarithmische Übertemperatur und daraus die wärmeleistung berechnet. Gegenüber dem bekannten Dreifühlerverfahren besteht hier der Vorteil, daß eine aufgelöste Bauweise nicht notwendig ist, und das Verfahren mit einem kompakten Heizkostenverteiler darstellbar ist.

Die Raumluftmessung kann hierbei auch durch Rückschluß aus dem Temperaturverlauf und Verwendung einer numerisch bestimmten Raumtemperatur ersetzt werden.

Alternativ können die gemessenen Temperaturen nicht zur Extrapolation auf Vor- und Rücklauftemperaturen verwendet werden, sondern es wird von den gemessenen Temperaturen direkt die logarithmische Übertemperatur berechnet. Dies kann durch Modifikation der Berechnungsgleichung, Verwendung von Anpassungsfaktoren oder Einführen eines geeigneten empirischen Ansatzes geschehen. Da die logarithmische Übertemperatur aus Vor- und Rücklauftemperaturen eine empirische Funktion ist, kann eine gleichwertige Größe auch aus anderen Temperaturen zusammengesetzt werden.

Die Raumluftmessung kann hierbei auch durch Rückschluß aus dem Temperaturverlauf und Verwendung einer numerisch bestimmten Raumtemperatur ersetzt werden.

Abermals alternativ wird die Raumluftmessung zusammen mit den ermittelten Oberflächentemperaturen zur numerischen Bestimmung des Heizmediumdurchsatzes verwendet. Aus den Größen Vorlauftemperatur, Rücklauftemperatur und Durchsatz wird die Wärmeleistung bestimmt.

Dieses Verfahren kann auch zur direkten Bestimmung der heizmediumseitigen Wärmeleistung aus den Meßwerten und der Raumluft herangezogen werden.

Eine weitere Ausbildung des Verfahrens liegt darin, nicht den Berechnungsweg auf Größen des Heizmediums zu gehen, sondern mit den ermittelten Temperaturen über eine angepaßte Heizkörperlinie, bei der Exponent und/oder die Korrekturfaktoren von der Nichtlinearität der Temperaturverteilung abhängig sind.

Die durch eine zusätzliche Raumluftmessung erreichte Redundanz kann dazu verwendet werden, die Raumluftmessung hinsichtlich Plausibilität zu prüfen, um die Manipulationssicherheit des Gerätes zu erhöhen. Oder die Redundanz wird dazu verwendet, die Raumluftmessung zu korrigieren, um die Genauigkeit des Meßgerätes zu erhöhen. Oder die Redundanz wird dazu verwendet, die Raumluftmessung hinsichtlich Plausibilität zu prüfen, um die Genauigkeit der Einschaltschwelle des Gerätes zu erhöhen.

Das Gerät ist, wie zeichnerisch dargestellt, vorzugsweise etwa im oberen Drittel des Heizkörpers angeordnet, wodurch ebenfalls die Meßgenauigkeit verbessert wird.

Im folgenden werden Berechnungen zur weiteren Erläuterung der Erfindung angestellt.

In den nachfolgenden Gleichungen bedeuten

| | |
|---|---|
| $\vartheta_V$ | Vorlauftemperatur |
| $\vartheta_R$ | Rücklauftemperatur |
| $\vartheta_1, \vartheta_2, \vartheta_3$ | Heizflächentemperaturen an den Meßstellen 1, 2, 3 |
| $x_1, x_2, x_3$ | relativer, senkrechter Abstand der Meßstellen vom Vorlaufanschluß |
| $\vartheta_L$ | Lufttemperatur |
| $Q$ | Heizkörperleistung |
| $K_1, K_2, K_3, K_4$ | Heizkörperspezifische Konstante |
| $K_5$ | Heizkörper- und Einbauhöhenabhängige Konstante |

1.) Interpolation von Vorlauf- und Rücklauftemperatur mittels zweier beliebiger Temperaturen auf der Heizfläche

$$\text{I)} \qquad \vartheta_V = \vartheta_L + e^{\left( \dfrac{\ln(\vartheta_1 - \vartheta_L) - \dfrac{x_1}{x_2} \ln(\vartheta_2 - \vartheta_L)}{1 - \dfrac{x_1}{x_2}} \right)}$$

$$\text{II)} \qquad \vartheta_R = (\vartheta_V - \vartheta_L) \cdot e^{\left( \dfrac{1}{x_2 - x_1} \ln \left[ \dfrac{\vartheta_2 - \vartheta_L}{\vartheta_1 - \vartheta_L} \right] \right)} + \vartheta_L$$

Aus den Meßwerten $\vartheta_L$, $\vartheta_1$, $\vartheta_2$ werden Vor- und Rücklauftemperatur $\vartheta_V$, $\vartheta_R$ berechnet.

$$\text{III)} \qquad \dot{Q} = K_1 \cdot \frac{\vartheta_V - \vartheta_R}{\ln \left[ \dfrac{\vartheta_V - \vartheta_L}{\vartheta_R - \vartheta_L} \right]}$$

Daraus wird die Heizkörperleistung $\dot{Q}$ berechnet.

2.) Direkte Berechnung der Heizkörperleistung

mittels zweier beliebiger Heizflächentemperaturen und der Lufttemperatur

## 1. Möglichkeit

$$\dot{Q} = K_2 \cdot \frac{\vartheta_1 - \vartheta_L}{\frac{1}{x_2-x_1}\ln\left[\frac{\vartheta_1-\vartheta_L}{\vartheta_2-\vartheta_L}\right]} \cdot \left(e^{\left(\frac{-x_1}{x_2-x_1}\ln\left[\frac{\vartheta_2-\vartheta_L}{\vartheta_1-\vartheta_L}\right]\right)}\right) \cdot \left(1-e^{\left(\frac{1}{x_2-x_1}\ln\left[\frac{\vartheta_2-\vartheta_L}{\vartheta_1-\vartheta_L}\right]\right)}\right)$$

## 2. Möglichkeit

$$\dot{Q} = K_3 \cdot \frac{\frac{x_2-x_1}{\left[\frac{\vartheta_1-\vartheta_L}{\vartheta_2-\vartheta_L}\right]}}{} \left(e^{\left(\frac{\ln(\vartheta_1-\vartheta_L)-\frac{x_1}{x_2}\ln(\vartheta_2-\vartheta_L)}{1-\frac{x_1}{x_2}}\right)}\right) \cdot \left(1-e^{\left(\frac{1}{x_2-x_1}\ln\left[\frac{\vartheta_2-\vartheta_L}{\vartheta_1-\vartheta_L}\right]\right)}\right)$$

Meßwerte sind jeweils $\vartheta_L$, $\vartheta_1$, $\vartheta_2$.

3.) Direkte Berechnung der Heizkörperleistung
mittels zweier Temperaturen auf der Heizfläche ohne Lufttemperaturmessung

$$\dot{Q} = K_4 \cdot \frac{\left[\left[\frac{\vartheta_1}{\vartheta_2}\right]^{\frac{x_1}{x_1-x_2}} - 1\right]^{K_5}}{\left[\left[\frac{\vartheta_1}{\vartheta_2}\right]^{\frac{x_2}{x_1-x_2}} - 1\right]^{K_5}} \cdot \vartheta_1 \cdot \left[\frac{\vartheta_1}{\vartheta_2}\right]^{\frac{x_1}{x_1-x_2}} \cdot \left[1 - \left[\frac{\vartheta_1}{\vartheta_2}\right]^{\frac{1}{x_1-x_2}}\right]$$

$K_4$ Heizkörperspezifische Konstante
$K_5$ Konstante abhängig von Heizkörper und relativer Einbauhöhe

4.) Korrektur- bzw. Vergleichswert für die gemessene Lufttemperatur eines elektronischen Heizkostenverteilers nach I) mittels einer dritten Heizflächentemperatur
(gemessen werden $\vartheta_1$, $\vartheta_2$, $\vartheta_L$; daraus werden $\vartheta_V$, $\vartheta_R$ und daraus Q berechnet)
Korrekturwert $\Delta_L$ für die gemessene Lufttemperatur $\vartheta_L$ mittels $\vartheta_3$:

$$\Delta_L = \vartheta_3 - \vartheta_L - \left[\left[\vartheta_V-\vartheta_L\right]^{1-x_3} \cdot \left[\vartheta_R-\vartheta_L\right]^{x_3}\right]$$

Bei korrekter Lufttemperaturmessung $\vartheta_L$ ist $\Delta_L = 0$. Dies dient z.B. zur Plausibilitätskontrolle.

5.) Korrektur- bzw. Vergleichswert für die gemessene Lufttemperatur eines elektronischen Heizkostenverteilers nach II) mittels einer dritten Heizflächentemperatur

(gemessen werden $\vartheta_1$, $\vartheta_2$, $\vartheta_L$; daraus wird Q berechnet)

Korrekturwert $\Delta_L$ für die gemessene Lufttemperatur $\vartheta_L$ mittels $\vartheta_3$:

$$\Delta_L = \vartheta_3 - \vartheta_L - \left( e^{\left( \frac{\ln(\vartheta_1 - \vartheta_L) - \frac{x_1}{x_2}\ln(\vartheta_2 - \vartheta_L)}{1 - \frac{x_1}{x_2}} \right)[1-x_3]} \right) \cdot \left( (\vartheta_V - \vartheta_L) \cdot e^{\left[ \frac{1}{x_2 - x_1}\ln\left[ \frac{\vartheta_2 - \vartheta_L}{\vartheta_1 - \vartheta_L} \right] \right] x_3} \right)$$

Bei korrekter Lufttemperaturmessung $\vartheta_L$ ist $\Delta_L = 0$.

## Patentansprüche

1. Vorrichtung zur Messung der Wärmemenge, die von einem Heizkörper (1) abgegeben wird, der über einen Vorlauf (2) und einen Rücklauf (3) von einem Heizmedium durchflossen ist, wobei wenigstens zwei in lotrechter Richtung voneinander beabstandete Temperaturfühler (7, 8) vorgesehen sind, die in wärmeleitender Verbindung mit dem Heizkörper (1) stehen, und aus deren Meßwerten über eine Auswerteschaltung die von dem Heizkörper (1) abgegebene Wärmemenge berechnet wird,
   **dadurch gekennzeichnet,**
   daß der lotrechte Abstand der beiden in einem gemeinsamen Gehäuse (6) untergebrachten Temperaturfühler (7, 8) fühlbar kleiner ist als der lotrechte Abstand (H) zwischen dem Vorlauf (2) und dem Rücklauf (3).

2. Vorrichtung nach Anspruch 1,
   **dadurch gekennzeichnet,**
   daß mindestens ein zusätzlicher Temperaturfühler (7, 8) vorgesehen ist.

3. Vorrichtung nach Anspruch 1 oder 2,
   **dadurch gekennzeichnet,**
   daß zumindest einer der Temperaturfühler (7, 8) in direktem Kontakt mit der Oberfläche des Heizkörpers (1) steht.

4. Vorrichtung nach Anspruch 2 oder 3,
   **dadurch gekennzeichnet,**
   daß einer der zusätzlichen Temperaturfühler die Temperatur der Umgebungsluft mißt.

5. Vorrichtung nach einem der Ansprüche 1 - 4,
   **dadurch gekennzeichnet,**
   daß die Auswerteschaltung so ausgebildet ist, daß sie aus den Meßwerten der Temperaturfühler (7, 8) eine Kurve (4, 5) extrapoliert, die, abhängig von dem jeweiligen Heizmitteldurchsatz durch den Heizkörper (1), dem erwarteten Temperaturprofil des Heizkörpers (1) entspricht.

6. Vorrichtung nach einem der Ansprüche 1 - 5,
   **dadurch gekennzeichnet,**
   daß das Gehäuse (6) mit den Temperaturfühlern (7, 8) im oberen Drittel des Heizkörpers (1) am Heizkörper (1) angebracht ist.

**Claims**

1. Appliance for measuring the heat quantity which is given up by a radiator (1) through which a heating medium flows by means of a supply main (2) and a return main (3), at least two temperature sensors (7, 8) being provided at a distance from one another in the vertical direction, which temperature sensors (7, 8) are in heat-conducting connection to the radiator (1) and whose measurements are used by an analysis circuit to calculate the heat quantity given up by the radiator (1), characterised in that the vertical distance between the two temperature sensors (7, 8), which are accommodated in a common housing (6), is noticeably smaller than the vertical distance (H) between the supply main (2) and the return main (3).

2. Appliance according to Claim 1, characterised in that at least one additional temperature sensor (7, 8) is provided.

3. Appliance according to Claim 1 or 2, characterised in that at least one of the temperature sensors (7, 8) is in direct contact with the surface of the radiator (1).

4. Appliance according to Claim 2 or 3, characterised in that one of the additional temperature sensors measures the temperature of the ambient air.

5. Appliance according to one of Claims 1 to 4, characterised in that the analysis circuit is designed in such a way that it extrapolates a curve (4, 5) from the measurements of the temperature sensor (7, 8), which curve (4, 5) corresponds to the temperature profile of the radiator (1) expected as a function of the respective flow rate of the heating medium through the radiator (1).

6. Appliance according to one of Claims 1 to 5, characterised in that the housing (6) with the temperature sensors (7, 8) is attached to the radiator (1) on the upper third of the radiator (1).

**Revendications**

1. Dispositif pour mesurer la quantité de chaleur qui est fournie par un corps chauffant (1), lequel est parcouru par un fluide chauffant au travers d'une arrivée (2) et d'un départ (3), deux capteurs de température (7, 8) au moins, qui sont placés à distance l'un de l'autre en direction verticale et qui sont en liaison de conduction de chaleur avec le corps chauffant (1), étant prévus et la quantité de chaleur fournie par le corps chauffant (1) étant alors calculée à partir des valeurs qu'ils mesurent, par l'intermédiaire d'un circuit d'évaluation,
caractérisé en ce que,
l'écartement vertical des deux capteurs de température (7, 8), logés dans un boîtier commun (6), est plus petit, dans une mesure perceptible, que l'écartement vertical (H) entre l'arrivée (2) et le départ (3).

2. Dispositif selon la revendication 1, caractérisé en ce qu'au moins un capteur de température supplémentaire (7, 8) est prévu.

3. Dispositif selon la revendication 1 ou 2, caractérisé en ce que l'un au moins des capteurs de température (7, 8) se trouve en contact direct avec la surface libre du corps chauffant (1).

4. Dispositif selon la revendication 2 ou 3, caractérisé en ce que l'un des capteurs de température supplémentaires mesure la température de l'air ambiant.

5. Dispositif selon l'une des revendications 1 à 4, caractérisé en ce que le circuit d'évaluation est conçu de telle façon qu'à partir des valeurs mesurées par les capteurs de température (7, 8), il extrapole une courbe (4, 5) qui, en fonction du débit respectif du fluide chauffant à travers le corps chauffant (1), correspond au profil de température attendu du corps chauffant (1).

6. Dispositif selon l'une des revendications 1 à 5, caractérisé en ce que le boîtier (6) est, avec les capteurs de température (7, 8), monté sur le corps chauffant (1), dans le tiers supérieur du corps chauffant (1).

90°       70°

t

2

3

7

6

8

5

4

1

100 %

H

0 %

EP 0 669 524 B1